# EUROPÄISCHE PATENTSCHRIFT

(11) **EP 0 846 245 B1**
(45) Veröffentlichungstag und Bekanntmachung des Hinweises auf die Patenterteilung: **27.10.1999**
(21) Anmeldenummer: 96930093.8
(22) Anmeldetag: 23.08.1996
(51) Int. Cl.: F24J 2/24

(54) **SONNENKOLLEKTOR**
SOLAR COLLECTOR
COLLECTEUR DE CHALEUR SOLAIRE

(30) Priorität: 24.08.1995 AT 142995
(43) Veröffentlichungstag der Anmeldung: 10.06.1998
(73) Patentinhaber: Grösswang, Heinz, 4600 Wels (AT)
(72) Erfinder: Grösswang, Heinz, 4600 Wels (AT)
(74) Vertreter: Berngruber, Otto, Dr. Dipl.-Chem.
(86) Internationale Anmeldenummer: EP9603736
(87) Internationale Veröffentlichungsnummer: WO9708501

(56) Entgegenhaltungen:
- EP-A- 0 601 443
- US-A- 4 136 675
- US-A- 4 156 419
- US-A- 4 898 153

## Beschreibung

Die Erfindung bezieht sich auf einen Sonnenkollektor mit einem von einem Wärmeträger schlangenförmig durchflossenen Leitungssystem aus Metall.

Derartige Sonnenkollektoren sind bekannt. Das von dem Wärmeträger (meist Wasser) schlangenförmig durchflossene Leitungssystem wird dabei durch ein auf ein Kupferblech aufgelötetes schlangenförmig gebogenes Kupferrohr gebildet. Diese Einheit wird an der Oberseite schwarz gespritzt und in einem mit Glas abgedeckten Rahmen mit einer Isolierschicht unter dem Kupferblech angeordnet. Um die Abstände zwischen den Kupferrohren zumindest teilweise für die Wärmegewinnung zu nutzen, können auf den Kupferrohren zusätzlich Wärmeleitbleche aufgebracht werden.

Weil die Kontakt- und damit Wärmeübergangsfläche zwischen dem Kupferblech und dem Kupferrohr relativ gering ist, heizt sich bei dem bekannten Sonnenkollektor das Kupferblech stark auf. Damit ist einerseits eine aufwendige Isolierschicht unter dem Kupferblech erforderlich, zum anderen strahlt das Kupferblech einen Teil der Wärme wieder ab.

Aus WO93/15368 und US 4,898,153 sind Sonnenkollektoren bekannt, die aus einer Hohlprofilplatte aus einem lichtdurchlässigen Kunststoff, insbesondere Polykarbonat, bestehen. Die Hohlprofilplatten bestehen aus zwei Schichten, die durch parallele Längsstege unter Bildung von Kanälen verbunden sind, durch welche ein mit einem Sonnenlicht absorbierenden Material, also beispielsweise einer dunklen Farbe versetzter Wärmeträger strömt. Dabei besteht die Gefahr, daß sich ein Teil der Farbe in dem Hohlprofil absetzt, wodurch das Kunststoffhohlprofil, nicht aber der Wärmeträger aufgeheizt wird.

Die US-A-4 136 675 zeigt die Merkmale des ersten Teils von Anspruch 1.

Aufgabe der Erfindung ist es, einen einfach aufgebauten Sonnenkollektor mit einem hohen Wirkungsgrad bereitzustellen.

Dies wird erfindungsgemäß mit dem im Anspruch 1 gekennzeichneten Sonnenkollektor erreicht. In den Unteransprüchen sind vorteilhafte Ausgestaltungen der Erfindung wiedergegeben.

Der erfindungsgemäße Sonnenkollektor wird aus plattenförmigen Metallhohlprofilabschnitten hergestellt. Das Metallhohlprofil besteht aus zwei planparallelen Schichten, die durch Längsstege miteinander verbunden sind.

Das Metallhohlprofil wird durch Strangpressen hergestellt. Damit läßt sich auf einfache Weise ein Hohlprofil erhalten, bei dem die beiden Metallschichten nur einen geringen Abstand voneinander aufweisen.

Für einen hohen Wärmeübergang vom Metallhohlprofil zu dem Wärmeträger und damit einem hohen Wirkungsgrad des Sonnenkollektors ist es nämlich notwendig, daß der Wärmeträger die Wärme des durch die Sonnenstrahlung erwärmten Metallhohlprofils schnell abführt. Damit der Wärmeträger auf eine möglichst hohe Temperatur aufgeheizt wird, muß zudem die Wärmeabführung durch eine möglichst kleine Wärmeträgermenge erfolgen. Dies hat zur Folge, daß der Abstand zwischen den beiden Schichten des Hohlprofils möglichst klein sein soll, und zwar möglichst weniger als 10 mm, vorzugsweise weniger als 5 mm betragen soll.

Zudem läßt sich durch Strangpressen ein Metallhohlprofil mit sehr dünnen Schichten und dünnen Längswänden herstellen, eine weitere Voraussetzung für einen schnellen Wärmeübergang. Die Stärke der beiden Schichten und der Längsstege der Hohlprofilabschnitte des erfindungsgemäßen Sonnenkollektors kann dabei beispielsweise 0,1 mm bis 1 mm betragen.

Um den Abstand der beiden Schichten des Hohlprofils zu verringern, wird erfindungsgemäß vorzugsweise ein Hohlprofil verwendet, das nach dem Strangpressen einer Verformung, insbesondere einer Kaltverformung, z.B. durch Pressen oder Walzen, unterworfen worden ist. Auf diese Weise kann ein Metallhohlprofil hergestellt werden, bei dem der Abstand der beiden Schichten nur noch 3 mm oder weniger beträgt. Der Mindestabstand der beiden Schichten sollte allerdings 1 mm betragen, da andernfalls der Strömungswiderstand für den Wärmeträger stark anwächst.

Das Metall, aus dem das Hohlprofil hergestellt wird, ist vorzugsweise ein Aluminiumwerkstoff, also Aluminium oder eine Aluminiumlegierung. Wie sich gezeigt hat, läßt sich ein Aluminiumwerkstoff besonders gut zu derartigen Hohlprofilen Strangpressen bzw. kalt verformen. Auch ist Aluminium beispielsweise gegenüber Kupfer wesentlich kostengünstiger, und beispielsweise gegenüber Eisen wesentlich korrosionsbeständiger.

Die Längsstege zwischen den beiden Schichten des Hohlprofils erhöhen die Wärmeübergangsfläche und verbessern damit zusätzlich den Wirkungsgrad. Auf sie kann jedoch auch deswegen nicht verzichtet werden, weil andernfalls das Hohlprofil nicht die erforderliche Druckfestigkeit besitzt. Der Betriebsdruck des Wärmeträgers beträgt nämlich im allgemeinen mehrere Bar.

Das Metallhohlprofil weist eine Breite von beispielsweise 5 cm bis 30 cm auf. Das stranggepreßte und ggf. kalt verformte Hohlprofil wird zu Abschnitten gewünschter Länge von z.B. 0,5 m bis 6 m geschnitten. Die plattenförmigen Hohlprofilabschnitte werden mit ihren Längsseiten nebeneinander angeordnet und so miteinander verbunden, daß der Wärmeträger schlangenförmig durch die Hohlprofilabschnitte fließt.

Die nebeneinander angeordneten Hohlprofilabschnitte bedekken damit praktisch die gesamte Absorberfläche. Damit besitzt der erfindungsgemäße Sonnenkollektor, bezogen auf die Absorberfläche, einen außerordentlichen hohen Wirkungsgrad.

Mit dem erfindungsgemäßen Kollektor kann daher auch im Winter ein direkter Heizungsbetrieb durchgeführt werden, insbesondere in Verbindung mit einer Wärmepumpe oder zur Regenerierung bzw. Unterstützung eines Horizontal- oder Vertikal-Erdkollektors. Aufgrund des hohen Wirkungsgrades kommt bei dem erfindungsgemäßen Sonnenkollektor der Isolation an der Rückseite des Absorbers keine große Bedeutung zu, weil nahezu die gesamte sonnenbestrahlte Fläche auch gleichzeitig den Wärmeträger führt und somit die gesamte absorbierte Wärme zuerst durch den Wärmeträger hindurch muß, um an der Rückseite des Sonnenkollektors Wärme abgeben zu können.

Der erfindungsgemäße Sonnenkollektor ist zudem, insbesondere wenn er aus einem Aluminiumwerkstoff besteht, relativ leicht. Auch besitzt er ein schnelles Ansprechverhalten. Das heißt, schon nach kurzer Sonnenscheindauer wird eine größere Menge Wärmeträger hoher Temperatur erzeugt.

Als Wärmeträger wird im übrigen normalerweise Wasser oder ein Gemisch aus Wasser mit einem Gefrierschutzmittel verwendet. Es kann jedoch auch eine andere Flüssigkeit oder ein Gas als Wärmeträger eingesetzt werden.

Um die Absorption der Sonnenstrahlung zu erhöhen, werden die Metallhohlprofilabschnitte auf der der Sonne zugewandten Seite mit einer Sonnenlicht absorbierenden Beschichtung versehen, beispielsweise mit einem Solarlack, einer Kunststoffbeschichtung oder bei Aluminiumwerkstoffen durch Eloxieren oder Schwarzchromatieren.

Zudem können die Hohlprofilabschnitte zumindest auf der der Sonne zugewandten Seite mit einer oberflächenvergrößernden Struktur versehen sein, beispielsweise aufgerauht sein, etwa durch Strahlen mit Sand oder dgl. Material oder mit einer Riffelung versehen sein. Die Aufrauhung bzw. Riffelung der Oberfläche kann bei der Hohlprofilherstellung durch Walzen erfolgen. Zugleich kann dabei der Innenseite dieser Schicht eine unebene Struktur verliehen werden, die zu einer turbulenten Strömung des Wärmeträgers in dem Hohlprofil führt. Damit wird der stärker erwärmte Wärmeträger im Bereich der Hohlprofilinnenwände mit dem übrigen Wärmeträger in dem Hohlprofil schneller vermischt, was zu einer weiteren Erhöhung des Temperaturübergangs und damit des Wirkungsgrades führt.

Aus diesem Grunde ist zumindest die von der Sonne abgewandte Schicht des Metallhohlprofils vorzugsweise mit einer den durchfließenden Wärmeträger in Turbulenz versetzenden Struktur versehen. Diese Struktur kann beispielsweise durch Dellen, Rippen oder dgl. in der von der Sonne abgewandten Schicht des Hohlprofils gebildet sein.

Auf der Rückseite des Hohlprofils kann ferner eine Wärmeisolationsschicht aufgebracht werden, beispielsweise durch Kleben oder Spritzen.

Der erfindungsgemäße Sonnenkollektor ist relativ flach ausgebildet und weist daher ein gefälliges Äußeres auf. Er kann aus dem Metallhohlprofil in praktisch jeder Länge hergestellt werden. Er ist damit auch architektonisch problemlos einsetzbar, z.B. als Fassadenelement.

An den beiden Stirnseiten ist der erfindungsgemäße Sonnenkollektor vorzugsweise mit jeweils einer Sammelleitung versehen, an die die offenen Stirnseiten der Hohlprofilabschnitte angeschlossen sind.

Die Sammelleitungen werden vorzugsweise durch Sammelrohre gebildet. Diese sind mit Längsschlitzen versehen, in die die Enden der Hohlprofilabschnitte eingedichtet sind, beispielsweise durch Schweißen oder Löten. Damit erhält der erfindungsgemäße Sonnenkollektor zugleich eine stabile, selbsttragende Struktur.

Damit der Wärmeträger mäander- oder schlangenförmig durch die nebeneinander angeordneten Hohlprofilabschnitte fließt, sind in den beiden Sammelrohren an den beiden Stirnseiten des Sonnenkollektors versetzt zueinander Trennwände angeordnet.

Die Trennwände können zwischen benachbarten Hohlprofilabschnitten vorgesehen sein. Sie können jedoch auch in einem größeren oder kleineren Abstand voneinander angeordnet sein.

Durch die Längsstege in den Hohlprofilabschnitten werden Kanäle gebildet. Die längste Fließstrecke durch den erfindungsgemäßen Sonnenkollektor wird also dann gebildet, wenn die Trennwände in den Sammelleitungen so angeordnet sind, daß der Wärmeträger von einem Kanal zum benachbarten Kanal unter Umkehrung seiner Strömungsrichtung fließt. Damit kann jedoch, insbesondere bei kleineren Kanalquerschnitten, ein hoher Strömungswiderstand auftreten, der eine entsprechend große Pumpenleistung erforderlich macht.

Die Trennwände in den Sammelleitungen können aus Scheiben, Pfropfen oder dgl. bestehen, die in die Sammelrohre gepreßt werden, beispielsweise auch als Hütchen ähnlich einem Kronkorkenflaschenverschluß.

Die Abstände für die ausgefrästen oder ausgestanzten Längsschlitze zum Einstecken der Hohlprofilabschnitte in die Sammelrohre sollen so klein wie möglich sein, beispielsweise 5 mm oder weniger, damit die Hohlprofilabschnitte mit ihren Längsseiten möglichst dicht aneinanderliegen.

Die Sammelleitungen können auch aus einem Rohr mit einem durchgehenden Schlitz zur Aufnahme der Enden der Hohlprofilabschnitte hergestellt sein, wobei dann der Schlitzbereich der Sammelrohre zwischen den Hohlprofilabschnitten abgedichtet werden muß.

Der erfindungsgemäße Sonnenkollektor kann allein mit aufgebrachter Wärmeisolation, z.B. für den In-Dacheinbau verwendet werden. Darunter ist der Einbau in das Dach unter Aussparung der Ziegelabdeckung zu verstehen, wobei der Kollektor mit einer Glasfläche abgedeckt wird.

Er kann jedoch auch in einem luftdichten, ggf. mit einem Gas befüllbaren Gehäuse angeordnet sein, das einen Rahmen aus mit Winkelverbindern verbundenen Hohlprofilen besteht.

Damit die Wärmeausdehnung des Rahmens der Wärmeausdehnung des darin angeordneten Sonnenkollektors möglichst entspricht, bestehen die Hohlprofile des Rahmens und die Hohlprofilabschnitte des Sonnenkollektors möglichst aus dem gleichen Metall, insbesondere dem gleichen Aluminiumwerkstoff.

Nachstehend ist der erfindungsgemäße Sonnenkollektor anhand der Zeichnung beispielsweise näher beschrieben. Darin zeigen:
- Fig. 1 und 2: in perspektivischer Wiedergabe einen Endabschnitt eines Hohlprofilabschnitts zur Herstellung des erfindungsgemäßen Sonnenkollektors, und zwar von der der Sonne zugewandten Vorderseite (Fig. 1) bzw. von der der Sonne abgesandten Rückseite (Fig. 2);
- Fig. 3: eine Draufsicht auf eine Ausführungsform des Sonnenkollektors in verkürzter Darstellung und mit einem weggebrochenen Teil eines Sammelrohres;
- Fig. 4: einen Schnitt durch den Kollektor nach Fig. 3 entlang der Line IV-IV;
- Fig. 5: eine Draufsicht auf einen in einem Gehäuse angeordneten Sonnenkollektor nach einer anderen Ausführungsform;
- Fig. 6: einen Schnitt durch das eine Ende des Kollektors nach Fig. 5 entlang der Line VI-VI; und
- Fig. 7: einen Teil des Rahmens des Gehäuses der Ausführungsform nach Fig. 5 und 6 mit einer leichten Abwandlung.

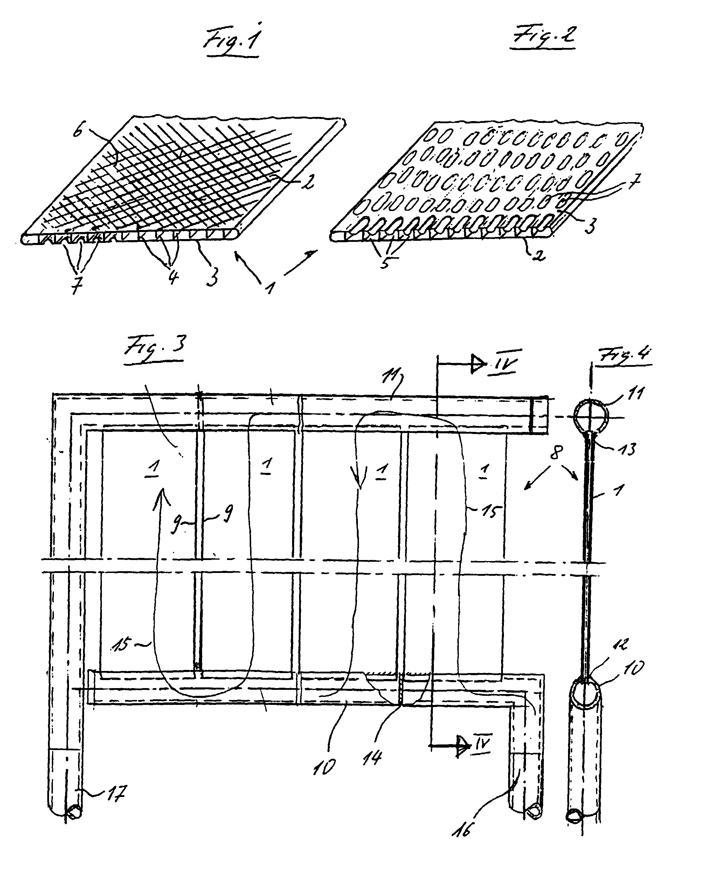

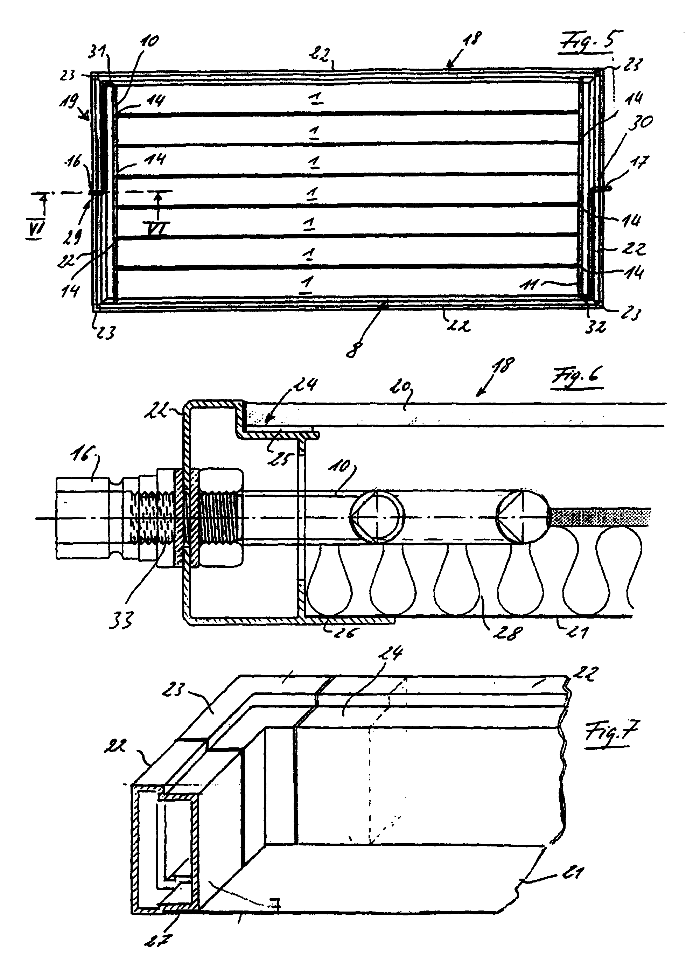

Gemäß Fig. 1 und 2 weist ein stranggepreßter plattenförmiger Metallhohlprofilabschnitt 1 zwei planparallele Schichten 2, 3 auf, die im Abstand voneinander angeordnet und durch Längsstege 4 miteinander verbunden sind. Dadurch werden zwischen den Schichten 2, 3 und den Längsstegen 4 Kanäle 5 gebildet.

Gemäß Fig. 1 ist die Schicht 2, an der der Sonne zugewandten Vorderseite des Hohlprofilabschnitts 1 mit einer Riffelung 6 und einer nicht dargestellten schwarzen Absorptionsfarbe versehen. Die Schicht 3, an der der Sonne abgewandten Rückseite des Hohlprofilabschnitts 1 ist mit dellenartigen Vertiefungen 7 versehen, die zu einer entsprechenden Verformung an der Innenseite der Kanäle führt, wie aus Fig. 1 und 2 ersichtlich.

Durch die Riffelung 6 wird die Absorptionsfläche für die Sonnenstrahlung vergrößert. Die Vertiefungen 7 führen zu einer turbulenten Strömung des Wärmeträgers in den Kanälen 5.

Gemäß Fig. 3 und 4 sind bei dem Sonnenkollektor 8 mehrere Hohlprofilabschnitte 1 gleicher Länge mit ihren Längsseiten 9 parallel nebeneinander angeordnet. An den beiden Stirnseiten des Sonnenkollektors 8 ist jeweils ein Sammelrohr 10, 11 vorgesehen, an das die offenen Stirnseiten der Hohlprofilabschnitte 1 angeschlossen sind, d.h. in die Kanäle 5 münden.

Die Sammelrohre 10, 11 sind dazu mit Längsschlitzen 12, 13 versehen, in die die Enden der Hohlprofilabschnitte 1 dicht eingelassen sind. Die Längsschlitze 12, 13 weisen dazu eine der Breite der Hohlprofilabschnitte 1 entsprechende Länge auf.

In den Sammelrohren 10, 11 sind Trennwände 14 vorgesehen, wobei in Fig. 3 nur eine Trennwand 14 gezeigt ist.

Die Trennwände 14 in den beiden Sammelleitungen 10, 11 sind so versetzt zueinander angeordnet, daß der Wärmeträger entsprechend dem Pfeil 15 mäander- oder schlangenförmig durch die Hohlprofilabschnitte 1 bzw. Kanäle 5 des Sonnenkollektors 8 von dem einen Ende des Sammelrohres 10, das mit einem Anschluß 16 für den Einlauf des Wärmeträgers versehen ist, zu dem diametral gegenüberliegenden Ende des Sammelrohres 11 strömt, das mit einem Anschluß 17 für den Auslauf des Wärmeträgers versehen ist.

Bei der Ausführungsform nach Fig. 5 und 6 ist der Sonnenkollektor bzw. das vom Wärmeträger schlangenförmig durchflossene Leitungssystem 8 in einem Gehäuse 18 angeordnet. Gleiche Teile sind dabei mit den gleichen Bezugsziffern versehen wie bei der Ausführungsform nach Fig. 3 und 4.

Das Gehäuse 18 besteht aus einem Rahmen 19, an dem auf der der Sonne zugewandten Seite eine Scheibe 20 aus Glas oder einem anderen zumindest infrarotlichtdurchlässigen Material und auf der von der Sonne abgewandten Seite eine Bodenplatte 21 vorgesehen ist. Die Glasscheibe 20 und die Bodenplatte 21 sind luftdicht mit dem Rahmen 19 verbunden.

Der Rahmen 19 besteht, wie insbesondere aus Fig. 7 ersichtlich, aus Hohlprofilen 22, die mit Winkelverbindern 23 verbunden sind, die in die Enden der Hohlprofile 22 gesteckt und ggf. verpreßt oder verklebt werden.

Gemäß Fig. 5 besteht der rechteckige Rahmen 19 aus vier Hohlprofilen 22 und vier rechtwinkligen Verbindern 23. Die Hohlprofile 22 und die Winkelverbinder 23 sind auf der der Sonne zugewandten Seite innen mit einer umlaufenden stufenförmigen Ausnehmung 24 versehen, in der die Glasscheibe 20 mit ihrem Rand unter Zwischenschaltung eines Klebers oder dgl. Abdichtung 25 angeordnet ist.

Der Boden 21 kann beispielsweise angeklebt sein. Gemäß Fig. 6 liegt er auf einem Innenflansch 26 des Hohlprofils 22 mit seinem Rand auf, und gemäß Fig. 7 liegt der Rand der Bodenplatte 21 in einer umlaufenden Ausnehmung 27 in dem Rahmen 19 ähnlich der Glasscheibe 20.

Gemäß Fig. 6 erstreckt sich zwischen den Hohlprofilabschnitten 1 und dem Boden 21 des Gehäuses 18 eine Wärmeisolationsschicht 28, beispielsweise aus einem Kunststoffschaum, wie PU-Schaum oder Mineralwolle.

Wie aus Fig. 5 und 6 ersichtlich, sind der Rahmen 19 bzw. die Hohlprofile 22 an den Stirnseiten des Rahmens 19 mit Durchführungen 29, 30 für die Sammelrohre 10, 11 zu den Anschlüssen 16 und 17 für den Einlauf bzw. Auslauf des Wärmeträgers versehen. Die Sammelrohre 10, 11 erstrecken sich dabei über ein Knie oder eine Biegung 31, 32 von dem Sonnenkollektor 8 bzw. den Hohlprofilabschnitten 1 zu den Anschlüssen 16 bzw. 17.

Dadurch werden unterschiedliche Wärmeausdehnungen des Rahmens 19 und der Hohlprofilabschnitte 1 in dem Gehäuse 18 kompensiert, insbesondere keine Längsausdehnungskräfte auf die abgedichteten Rohrdurchführungen 29, 30 in dem Rahmen 19 ausgeübt, die zu einer Undichtigkeit des Gehäuses 18 und damit zum Beschlagen der Glasscheibe 20 führen können.

Die Sammelleitungen 10, 11 können mit einem Gewinde 33 versehen sein, wie in Fig. 6 dargestellt. Auf das Gewinde 33 sind die Anschlüsse 16, 17 für den Einlauf bzw. Auslauf des Wärmeträgers aufgeschraubt.

Zur Abdichtung der Durchführungen 29, 30 können eine Innenmutter 33 sowie Dichtringe 34, 35 vorgesehen sein, die einerseits zwischen dem aufgeschraubten Anschluß 16 und der Außenseite des Hohlprofils 22 und andererseits zwischen der Mutter 38 und der Innenseite des Hohlprofils 22 angeordnet sind. Der Anschluß 17 für den Auslauf des Wärmeträgers ist in gleicher Weise ausgebildet.

Die Anschlüsse 16, 17 können mit verschiedenen Verbindern, beispielsweise Steckverbindern ausgerüstet sein, um Verwechslungen der Anschlüsse zu verhindern.

Das Gehäuse 18 kann evakuiert oder mit einem Gas gefüllt sein, das eine schlechtere Wärmeleitfähigkeit als Luft besitzt, beispielsweise mit Helium. Dazu kann der Rahmen 19 mit einem nicht dargestellten Ventil zum Evakuieren bzw. Füllen des Gehäuses 18 versehen sein. Ferner kann das Gehäuse 18 beispielsweise innerhalb des Hohlprofils 22 ein feuchtigkeitsabsorbierendes Material enthalten, wie Silicagel oder Zeolithgranulat.

## Patentansprüche

1. Sonnenkollektor mit einem von einem Wärmeträger durchflossenen Leitungssystem (8), das aus mit ihren Längsseiten (9) nebeneinander angeordneten Abschnitten (1) aus einem stranggepreßten Metallhohlprofil aus zwei durch parallele Längsstege (4) verbundenen Schichten (2, 3) besteht, wobei die offenen Stirnseiten der Hohlprofilabschnitte (1) derart miteinander verbunden sind, daß der Wärmeträger schlangenförmig durch die Hohlprofilabschnitte (1) fließt, dadurch gekennzeichnet, daß zum schlangenförmigen Durchfließen der Hohlprofilabschnitte (1) an den beiden Stirnseiten des Leitungssystems (8) jeweils ein Rohr (10, 11) vorgesehen ist, das mit Längsschlitzen versehen ist, in die die offenen Stirnseiten der Hohlprofilabschnitte (1) eingelassen sind, wobei in den Rohren (10, 11) versetzt zueinander Trennwände (14) angeordnet sind, daß das Metallhohlprofil zur Herstellung der Abschnitte (1) nach dem Strangpressen zur Verringerung des Abstandes der Schichten (2, 3) auf 3 mm oder weniger einer Verformung unterworfen worden ist, und daß die von der Sonne abgewandte Schicht (3) der Metallhohlprofilabschnitte (1) mit den Wärmeträger in Turbulenz versetzenden dellenartigen Vertiefungen (7) und die der Sonne zugewandte Schicht (2) mit einer oberflächenvergrößernden Struktur versehen ist, die auch der Innenseite eine unebene Struktur verleiht.

2. Sonnenkollektor nach einem der vorstehenden Ansprüche, dadurch gekennzeichnet, daß die Sammelleitungen (10, 11) über wenigstens eine Biegung (31, 32) mit den Anschlüssen (16, 17) für den Einlauf bzw. Auslauf des Wärmeträgers verbunden sind.

3. Sonnenkollektor nach einem der vorstehenden Ansprüche, dadurch gekennzeichnet, daß die Metallhohlprofilabschnitte (1) an ihrer der Sonne zugewandten Seite mit einer die Sonnenstrahlung absorbierenden Schicht versehen sind.

4. Sonnenkollektor nach einem der vorstehenden Ansprüche, dadurch gekennzeichnet, daß das Metall, aus dem die Hohlprofilabschnitte (1) bestehen, ein Aluminiumwerkstoff ist.

5. Sonnenkollektor nach einem der vorstehenden Ansprüche, dadurch gekennzeichnet, daß das Leitungssystem in einem gasdichten Gehäuse (18) angeordnet ist, das aus einem Rahmen (19), einer Platte (20) aus einem zumindest infrarotlichtdurchlässigen Material auf der der Sonne zugewandten Seite des Rahmens (19) und aus einem Boden (21) auf der anderen Seite des Rahmens (19) besteht.

6. Sonnenkollektor nach Anspruch 5, dadurch gekennzeichnet, daß der Rahmen (19) aus mit Winkelverbindern (23) verbundenen Hohlprofilen (22) besteht.

7. Sonnenkollektor nach Anspruch 6, dadurch gekennzeichnet, daß die Hohlprofile (22) des Rahmens (19) aus dem gleichen Metall wie die Hohlprofilabschnitte (1) des Leitungssystems (8) bestehen.

8. Sonnenkollektor nach einem der Ansprüche 5 bis 7, dadurch gekennzeichnet, daß der Rahmen (19) an der der Sonne zugewandten Seite eine Ausnehmung (27) zur Aufnahme der Platte (20) aus dem zumindest infrarotlichtdurchlässigen Material aufweist.

9. Sonnenkollektor nach einem der Ansprüche 5 bis 8, dadurch gekennzeichnet, daß das Gehäuse (18) ein feuchtigkeitsabsorbierendes Material enthält.

## Claims

1. A solar collector with a piping system (8) through which a heat carrier flows in serpentine fashion, characterized in that the pipe system (8) consists of portions (1), disposed side by side with their long sides (9), of an extruded metal hollow section comprising two layers (2, 3) connected by parallel longitudinal webs (4), the open faces of the hollow section portions (1) being interconnected such that the heat carrier flows in serpentine fashion through the hollow section portions (1). One pipe each (10, 11) is provided at both ends for the serpentine passing of the hollow section portions (1) of the piping system (8) . This pipe (10, 11) has longitudinal slots in which open faces of the hollow section portions (1) are connected, the collection pipes (10, 11) containing mutually offset partitions (14), so that the metal hollow sections for the production of the sections (1) after extruding for the reduction of the distance of the layers (2, 3) to 3 mm or less has been deformed and the layer facing away from the sun (3) of the metal hollow section portions (1) with the indentations (7) which generate turbulance in the heat carrier and the layer facing the sun (2) has a structure to increase the surface area wich also provides an uneven structure on the inside.

2. The solar collector of any of the above claims, characterized in that the collecting pipes (10, 11) are connected via at least one bend (31, 32) with the connections (16, 17) for the inflow and outflow of the heat carrier.

3. The solar collector of any of the above claims, characterized in that the metal hollow section portions (1) are provided on their side facing the sun with a layer absorbing solar radiation.

4. The solar collector of any of the above claims, characterized in that the metal from which the hollow section portions (1) are made is an aluminum material.

5. The solar collector of any of the above claims, characterized in that the pipe system is disposed in a gastight housing (18) consisting of a frame (19), a plate (20) made of an at least infrared-transparent material on the side of the frame (19) facing the sun, and of a base (21) on the other side of the frame (19).

6. The solar collector of claim 5, characterized in that the frame consists of hollow sections (22) connected with angle connectors (23).

7. The solar collector of claim 6, characterized in that the hollow section (22) of the frame (19) are made of the same metal as the hollow sections portions (1) of the pipe system (8).

8. The solar collector of any of claims 5 to 7, characterized in that the frame (19) has a recess (27) on the side facing the sun for receiving the plate (20) made of at least infrared-transparent material.

9. The solar collector of any of claims 5 to 8, characterized in that the housing (18) contains a moisture-absorbent material.

## Revendications

1. Collecteur de chaleur solaire avec un système circuit porte chaleur (8) qui résulte des cotés de la longueur (9) des segments l'un à coté de l'autre (1), d'un profil concave de métal de corde pressé, de deux traverses parallèles le long (4) des couches raccordés (2, 3) à quelle occasion les cotés frontalés des profils concaves segmentés (1) sont accordés de telle facon que le porte chaleur circule serpentin à travers les profils concaves (1) marqués parce que les profils concaves serpentins circulent aux deux cotés frontales du système de circuit (8) ou chaque fois un tujau (10, 11) est prévu, ou sont mis les profils concaves segmentés dans les fentes de longueur ouverts des cotés frontales (1) dans lesquelles les tuyaux (10, 11) sont appliqués déplacés (14) afin que le profil de métal concave pour la production des segments (1) après la pression des cordes des couches (2, 3) de 3 mm ou moins de déformation possible, afin que la couché outre du soleil (3) des profils segmentés métaliques concaves (1) avec les portes chaleur en turbulence déplacés des cavités (7) et la couche tourné vers le soleil (2) avec une structure de surface agrandie admise, ou la couche intérieure a une structure inegale.

2. Collecteur de chaleur solaire est marqué d'après une des prétentions prévus afin que les circuits accumulés (10,11) sont au moins pliés (31, 32) avec les raccords (16, 17) pour l'entrée ou la sortie du porte chaleur.

3. Collecteur de chaleur solaire par une des prétentions prévus, est marqué tellement que les profils segmentés métaliques concaves (1) sont garnis d'une couche absorbante du coté des rayons solairs.

4. Collecteur de chaleur solaire par une des prétentions prévus est marqué tel que le métal des profils concaves segmentés (1) doit etre d'aluminium.

5. Collecteur de chaleur solaire par une des prétentions prévus est marqué que le système circuit est dans un boitier de gaz hermétique (18) composé d'un cadre (19), d'un plateau (20) fabriqué au moins d'une matière infrarouge permeable du coté au soleil cadre (19) et avec un fond (21) d l'autre coté du cadre (19).

6. Collecteur de chaleur solaire d'après prétention 5, est marqué tel que le cadre (19) subsiste d'angles liés (23) avec les profils concaves (22).

7. Collecteur de chaleur solaire d'après prétention 6, est marqué tel que les profils concaves (22) des cadres (19) subsistent du meme métal que les profiles concaves segmentés (1) du circuit (8).

8. Collecteur de chaleur solaire d'après une des prétentions 5 à 7, marqués de telle sorte, que le cadre (19) du coté tourné vers le soleil, au un creux (27) pour prendre le plateur (20) du matériel infrarouge perméable.

9. Collecteur de chaleur solaire d'apres une des prétentions 5 à 8, marqués tel que le boitier (18) consiste d'une matière qui absorbe l'humidité.
